# EUROPEAN PATENT APPLICATION

(11) **EP 4 412 394 A1**
(43) Date of publication of application: **07.08.2024**
(21) Application number: 21958889.4
(22) Date of filing: 30.09.2021
(51) Int. Cl.: H04W 84/04

(54) **TRACKING REGION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LI, Xiaolong, Beijing 100085 (CN)
(74) Representative: Gunzelmann, Rainer
(86) International application number: PCT/CN2021/122194
(87) International publication number: WO 2023/050317

(57) **Abstract**

Embodiments of the present disclosure provide a tracking region processing method and apparatus, a communication device and a storage medium. The tracking region processing method performed by a core network device may comprise: receiving a non-access stratum (NAS) request message and TA information of a first TA that is determined by an access network device for a user equipment (UE); and after the NAS request message, sending a NAS message comprising the TA information of the first TA to the UE.

## Description

### TECHNICAL FIELD

The present disclosure relates to a field of wireless communication technologies, but is not limited to the field of wireless communication technologies, and particularly relates to a method and an apparatus for tracking area (TA) processing, a communication device, and a storage medium.

### BACKGROUND

With the development of communication technologies, a user equipment (UE) may not only access a terrestrial network (TN), but also access a non-terrestrial network (NTN). Usually, access network devices of the NTN are carried by satellites, and such satellites equipped with the access network devices can be called communication satellites.

According to movements of the communication satellites relative to the earth, the satellites can be grouped into geosynchronous communication satellites and non-geosynchronous communication satellites.

When the communication satellites are the non-geosynchronous satellites, continuous coverage of a ground service area can be achieved by keeping a TA delimited on the ground fixed and through beam steering, service satellite switching, and other technologies, so as to achieve a continuous and stable coverage effect similar to TN.

### SUMMARY

Embodiments of the present disclosure provide a method and an apparatus for tracking area processing, a method and an apparatus for information processing, a communication equipment, and a storage medium.

A first aspect of embodiments of the present disclosure provides a method for TA processing. The method is performed by a core network device, and the method includes
receiving a non-access stratum (NAS) request message and TA information of a first TA determined by an access network device for a user equipment (UE); and
sending a NAS message comprising the TA information of the first TA to the UE after the NAS request message.

A second aspect of embodiments of the present disclosure provides a method for TA processing. The method is performed by an access network device, and the method includes:
receiving a NAS request message sent by a UE;
determining a first TA of the UE;
sending TA information of the first TA and the NAS request message to a core network device, or sending the TA information of the first TA to the UE.

A third aspect of embodiments of the present disclosure provides a method for TA processing. The method is performed by a UE, and the method includes: sending a NAS request message; receiving TA information of a first TA, in which the first TA is determined by an access network device for the UE; and saving the TA information of the first TA.

A fourth aspect of embodiments of the present disclosure provides an apparatus for tracking area TA processing. The apparatus is performed by a core network device, and the apparatus includes
a first receiving module, configured to receive a non-access stratum (NAS) request message and TA information of a first TA determined by an access network device for a user equipment (UE); and
a first sending module, configured to send a NAS message comprising the TA information of the first TA to the UE after the NAS request message.

A fifth aspect of embodiments of the present disclosure provides an apparatus for TA processing. The apparatus is performed by an access network device, and the apparatus includes:
a second receiving module, configured to receive a NAS request message sent by a UE;
a determining module, configured to determine a first TA of the UE; and
a second sending module, configured to send TA information of the first TA and the NAS request message to a core network device, or send the TA information of the first TA to the UE.

A sixth aspect of embodiments of the present disclosure provides an apparatus for TA processing. The apparatus is performed by a UE, and the apparatus includes:
a third sending module, configured to send a NAS request message;
a third receiving module, configured to receive TA information of a first TA, in which the first TA is determined by an access network device for the UE; and
a saving module, configured to save the TA information of the first TA.

A seventh aspect of embodiments of the present disclosure provides a communication device, including a processor, a transceiver, a memory, and executable programs stored on the memory and capable of being run by the processor. The processor is configured to perform the method for TA processing provided in any one of the aforementioned first to third aspects, by running the executable programs.

An eighth aspect of embodiments of the present disclosure provides a computer storage medium, the computer storage medium stores executable programs. When the executable programs are executed by a processor, the method for TA processing provided in any one of the aforementioned first to third aspects is implemented.

In the technical solution provided by the embodiments of the present disclosure, the core network device receives the TA information of the first TA determined by the access network device for the UE while receiving the NAS request message of the UE, and makes the TA information of the first TA to be carried in the NAS message to be used for the UE to complete an RA update or FA update based on the NAS request message and the NAS message, so as to realize call reachability or send unnecessary network access requests.

It should be understood that both the foregoing general description and the following detailed description are exemplary and explanatory only, and are not intended to limit the embodiments of the present disclosure.

### BRIEF DESCRIPTION OF THE DRAWINGS

The accompanying drawings, which are incorporated in and constitute a part of the description, illustrate embodiments consistent with the present invention and together with the description serve to explain principles of the embodiments of the present invention.
Fig. 1 is a schematic structural diagram of a wireless communication system according to an exemplary embodiment.
Fig. 2 is a schematic diagram showing a cell movement and a change of broadcasted TA information according to an exemplary embodiment.
Fig. 3 is a schematic diagram showing a cell movement and a change of broadcasted TA information according to an exemplary embodiment.
Fig. 4 is a schematic flowchart of a registration update procedure according to an exemplary embodiment.
Fig. 5 is a schematic flowchart of a registration update procedure according to an exemplary embodiment.
Fig. 6 is a schematic flowchart of a method for TA processing according to an exemplary embodiment.
Fig. 7A is a schematic diagram showing a cell movement and a change of broadcasted TA information according to an exemplary embodiment.
Fig. 7B is a schematic flowchart of a method for TA processing according to an exemplary embodiment.
Fig. 8 is a schematic flowchart of a method for TA processing according to an exemplary embodiment.
Fig. 9A is a schematic diagram showing a cell movement and a change of broadcasted TA information according to an exemplary embodiment.
Fig. 9B is a schematic flowchart of a method for TA processing according to an exemplary embodiment.
Fig. 9C is a schematic flowchart of a method for TA processing according to an exemplary embodiment.
Fig. 9D is a schematic flowchart of a method for TA processing according to an exemplary embodiment.
Fig. 10A is a schematic diagram showing a cell movement and a change of broadcasted TA information according to an exemplary embodiment.
Fig. 10B is a schematic flowchart of a method for TA processing according to an exemplary embodiment.
Fig. 11A is a schematic diagram showing a cell movement and a change of broadcasted TA information according to an exemplary embodiment.
Fig. 11B is a schematic flowchart of a method for TA processing according to an exemplary embodiment.
Fig. 12 is a schematic flowchart of a method for TA processing according to an exemplary embodiment.
Fig. 13 is a schematic structural diagram of an apparatus for TA processing according to an exemplary embodiment.
Fig. 14 is a schematic structural diagram of an apparatus for TA processing according to an exemplary embodiment.
Fig. 15 is a schematic structural diagram of an apparatus for TA processing according to an exemplary embodiment.
Fig. 16 is a schematic structural diagram of a UE according to an exemplary embodiment.
Fig. 17 is a schematic structural diagram of a communication device according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the embodiments of the present disclosure and as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if" as used herein may be interpreted as "upon" or "when" or "in response to determining that".

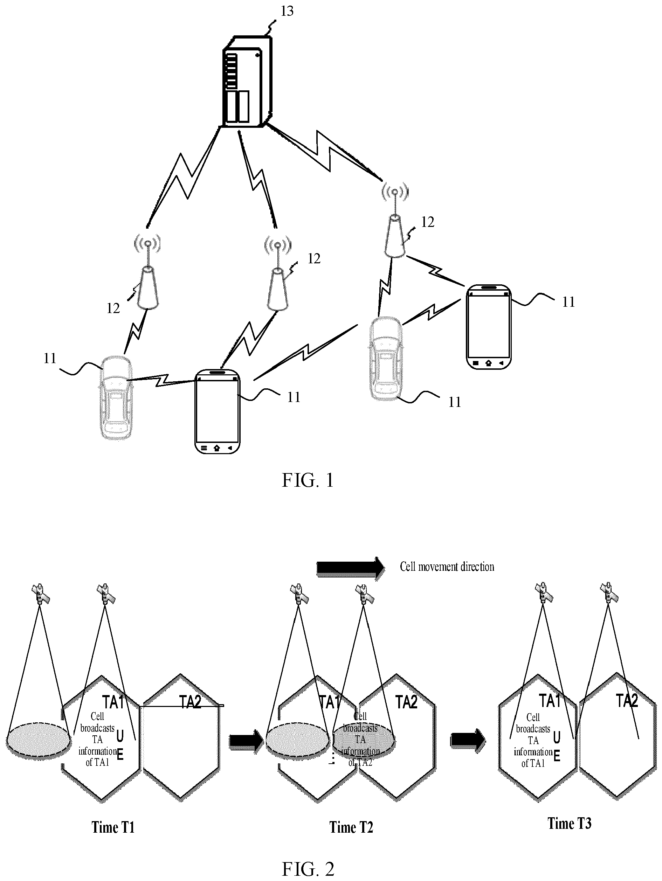

Please refer to FIG. 1, which shows a schematic structural diagram of a wireless communication system provided by an embodiment of the present disclosure. As shown in FIG. 1, the wireless communication system is a communication system based on cellular mobile communication technology, and the wireless communication system may include: several UEs 11 and several access network devices 12.

The UE 11 may be a device that provides voice and/or data connectivity to a user. The UE 11 may communicate with one or more core networks via a radio access network (RAN). The UE 11 may be an Internet of Things UE, such as a sensor device, a mobile phone (or called a "cellular" phone), and a computer having an Internet of Things UE, for example, may be a fixed, portable, pocket, hand-held, built-in or onboard device. For example, a station (STA), a subscriber unit, a subscriber station, a mobile station, a mobile, a remote station, an access point, a remote UE (remote terminal), an access UE (access terminal), a user equipment (user terminal), a user agent, a user device, or a user equipment. Alternatively, UE 11 may also be a device of an unmanned aerial vehicle. Alternatively, UE 11 may also be a vehicle-mounted device, for example, it may be a trip computer with a wireless communication function, or a wireless communication device connected externally to a trip computer. Alternatively, the UE11 may also be a roadside device, for example, it may be a street lamp, a signal lamp, or other roadside devices with a wireless communication function.

The access network device 12 may be a network side device in a wireless communication system. The wireless communication system may be a fourth generation mobile communication technology (4G) system, also known as a long term evolution (LTE) system; or, the wireless communication system may also be a 5G system, also known as a new radio (NR) system or 5G NR system. Alternatively, the wireless communication system may also be a system of generation next to the 5G system. An access network in the 5G system may be called new generation-radio access network (NG-RAN). Or, an MTC system.

The access network device 12 may be an evolved access network device (eNB) adopted in the 4G system. Alternatively, the access network device 12 may also be an access network device (gNB) adopting a centralized and distributed architecture in the 5G system. When the access network device 12 adopts a centralized and distributed architecture, it generally includes a central unit (CU) and at least two distributed units (DUs). The centralized unit is provided with a packet data convergence protocol (PDCP) layer, a radio link layer control (RLC) layer, a media access control (MAC) layer protocol stack. The distributed unit is provided with a physical (PHY) layer protocol stack. The embodiments of the present disclosure do not limit specific implementations of the access network device 12.

A wireless connection can be established between the access network device 12 and the UE 11 through a wireless air interface. In different implementations, the wireless air interface is a wireless air interface based on a fourth-generation mobile communication network technology (4G) standard; or, the wireless air interface is a wireless air interface based on a fifth-generation mobile communication network technology (5G) standard, for example, the wireless air interface is a new air interface; alternatively, the wireless air interface may also be a wireless air interface based on a mobile communication network technical standard of generation next to 5G.

In some embodiments, an end-to-end (E2E) connection may also be established between the UE 11s. For example, vehicle to vehicle (V2V) communication, vehicle to infrastructure (V2I) communication and vehicle to pedestrian (V2P) communication in a vehicle to everything (V2X) communication scene.

In some embodiments, the above wireless communication system may further include a network management device 13.

Several access network devices 12 are connected to the network management device 13 respectively. The network management device 13 may be a core network device in a wireless communication system. For example, the network management device 13 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS), etc. The implementation of the network management device 13 is not limited in the embodiments of the present disclosure.

In a scene where the UE uses satellite access technology to access the 5G network, when the communication satellite used is a non-geosynchronous satellite, in order to achieve a continuous and stable coverage effect similar to that of the terrestrial cellular network, the following technologies need to be used.

First, a tracking area (TA) delimited on the ground is kept fixed.

Secondly, since the satellite is moving relative to the earth surface, technologies such as beam steering and service satellite switching are required to always ensure continuous coverage of the ground service area.

As shown in FIG. 2, TA1 and TA2 delimited on the ground remain unchanged, and a satellite 1 covers TA1 at time T1 and continues to provide services, and broadcasts TA information of TA1 to the ground.

Satellite 1 moves relative to the ground. At time T2, the coverage area of the satellite 1 is located at the border between TA1 and TA2 and covers both TA1 and TA2. The satellite 1 broadcasts TA information of TA2 to the ground.

At time T3, the satellite 1 moves out of the service area of TA1. At this time, a satellite 2 moving into this area needs to continue to provide the service, that is, the satellite 2 continues to broadcast TA information of TA1 to the ground, so as to ensure to provide the continuous and stable communication signal coverage to a UE in the TA1 area.

In satellite communication technology, a communication satellite cell may broadcast one or more TAs to a user:
As shown in FIG. 2, the satellite broadcasts TA information of a single TA (the mode of broadcasting the TA information of a single TA is called mode A). The satellite broadcasting at different times is shown in FIG. 2. Taking a UE in the TA1 area as an example, the satellite 1 broadcasts TA1 at time T1. At time T2, the satellite 1 moves to the border between TA1 and TA2. At this time, if the coverage of the satellite 1 on TA2 is greater than that on TA1, it will broadcast TA2. At time T3, the satellite 1 has completely moved out of the coverage area of TA1, and the satellite 2 moving into this coverage area provides service, and broadcasts TA1. Therefore, the TA information received by the UE at TA1 at different times indicates TA1, TA2, TA1, TA2, ...

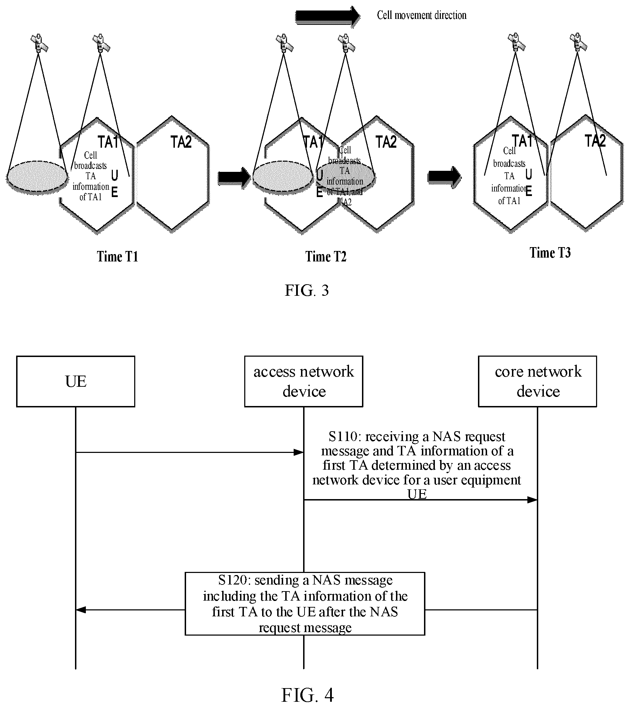

As shown in FIG. 3, the satellite broadcasts TA information of more than one TA (the mode of broadcasting TA information of more than one TA is called mode B). The satellite broadcasting at different times is shown in FIG. 3.

Taking a UE in TA1 as an example, the satellite 1 broadcasts TA1 at time T1. At time T2, satellite 1 moves to the border between TA1 and TA2, and at this time, the satellite 1 broadcasts TA information of TA1 and TA information of TA2. At time T3, the satellite 1 has completely moved out of the coverage area of TA1, and the satellite 2 moving into this coverage area provides services and broadcasts TA information of TA1. Therefore, a TA indicated by the TA information received by the UE in TA1 at different times is TA1, TA1 and TA2, TA1, TA1+TA2, ...

In the process of satellite communication, mode A and mode B would exist at the same time.

When a UE accesses a core network through satellite technology, after an initial access registration is successfully performed, an access management function (AMF) builds an authorized registration area (RA) for the UE, the RA may include a group of TAs, and RA information of the RA may be a TA list of TAs included in the RA. The AMF returns the RA information to the UE. Afterwards, when the UE or the satellite moves, if a TA indicated by broadcasted TA information received by the UE is not included in the RA, the UE will initiate a registration update and carry the TA information received by the UE to the AMF, and the AMF will update the RA, so as to include the TA indicated by the broadcasted TA information received by the UE.

If at least one of the TAs indicated by the broadcast information (the broadcasted TA information) received by the UE is included in the RA, the UE does not need to initiate a registration update.

For example, in FIG. 2, the RA received by the UE after successful initial registration includes TA1. When TA2 arrives, a broadcast message received by the UE includes TA2, which is not included in the RA. At this time, the UE will trigger a registration update, so that the updated RA includes TA2.

As shown in FIG. 3, the RA received by the UE after successful initial registration includes TA1. When TA2 arrives, a broadcast message received by the UE includes the TA information of TA1 and TA2, and the UE will not initiate a registration update.

In addition to defining the RA, the network side will also define a forbidden area (FA) and service area restriction (SAR), and return FA information and SAR information to the UE.

FA is a TA forbidden list, and a UE in the TA is forbidden to access the network. The UE updates the list based on a rejection cause code received from the network. For example, if the UE needs to register in the FA area, the network returns a cause code "TA is not allowed", and then the UE adds the TA to the FA list, and does not initiate network communication when the UE is in the TA.

The SAR information may be a list of allowed TAs and non-allowed TAs provided by the AMF to the UE. The SAR includes TAs that are allowed to access and TAs that are forbidden (i.e., not allowed) to access. This list only covers TAs included in RAs. When the registration is updated, the UE will receive updated RA and SAR.

During an initial network access for a UE, relatively accurate UE location information (such as a current TA of the UE) is not necessary for the network, but after the UE completes registration and enters a connection state, the network side needs to know relatively accurate location information of the UE, so that the UE can be paged according to a TA where the UE is currently located when performing services (such as emergency call service).

Solution 1: The UE selects a TA according to one (mode A) or more than one TA (mode B) included in a received satellite cell broadcast message, and sends a NAS request message including the TA to the AMF via a gNB. The UE selects a TA based on the RA, FA and SAR saved by UE. The TA may represent a current location of the UE, and subsequently, the AMF may send a paging request according to the TA.

In this way, the UE selects the TA and sends it to the AMF, which ensures that the TA selected by the UE is consistent with the TA subsequently used by the network.

The processing performed by the gNB is relatively simple. The gNB only forwards the TA sent by the UE to the AMF without any processing. When the AMF sends the paging request to the gNB, the gNB only sends a paging message to the satellite cell that broadcasts the TA.

However, there are following problems at the same time.

The UE cannot perceive a TA where it is actually located. Therefore, the UE cannot perform TA selection based on its current location, that is, the TA selected and reported by the UE may not represent the current location of the UE, or there may be wrong location information selected by the UE to deceive the network, that is, whether the information sent by the UE is credible. In addition, there are also problems such as privacy leakage caused by the location-related information sent by the UE.

It is easy to generate frequent trigger registration updates. For mode A, as shown in FIG. 2, it is assumed that the UE is in TA1, the initial registration is completed at T1, and RA1 only includes TA1. At time T2, the UE receives the broadcast information TA2, determines that TA2 is not included in the RA, and initiates a registration update to make the RA include TA2. At time T3, the UE receives the broadcast information TA1, determines that the RA does not include TA1, and initiates a registration update to make the RA include TA1. In this way, as the changes of the TA broadcasted by the satellite cell, it may trigger the UE to continuously initiate a registration update procedure.

It is easy to generate an FA oscillation or FA control failure. As shown in FIG. 1, for example, TA1 belongs to the FA, and TA2 does not belong to the FA. At time T 1, the broadcasted TA1 received by the UE1 is forbidden from accessing the network. At time T2, the broadcasted TA2 received by the UE1 is allowed to access the network. But until time T3, UE1 receives TA1 again and is forbidden from accessing the network, so the FA oscillation occurs. As shown in FIG. 2, the UE is actually at TA1, and it is assumed that TA1 is FA. At this time, the UE should be forbidden from accessing the network. However, at time T2, the UE1 receives the broadcasted TA1+TA2, the UE1 at TA1 may select TA2 to access the network. At this time, it will lead to the FA control failure.

Solution 2: when receiving the NAS request message sent by the UE, the gNB determines the TA where the UE is currently located and makes it to be included in the NAS request message and sends the NAS request message to the AMF. Subsequently, the AMF may send a paging request according to the TA, and the base station will send a paging message after receiving the paging request.

In this solution, the network device replaces the UE to report the current TA of the UE, which is accurate and reliable. Moreover, the TA received by the network represents the current location of the UE, and there will be no paging accuracy problem. Regardless of how the broadcasted TA changes, continuous restricted area control will be performed based on the TA where the UE is currently located.

But there are following problems at the same time.

The TA broadcasted to the UE may be different from the TA used by the network (reported by the gNB), which may lead to a deadlock in the registration update procedure. For example, in FIG. 2, the UE1 has undergone the initial registration, and the RA includes TA1. At time T2, the UE1 receives the broadcasted TA2, which is not included in RA. The UE1 initiates a registration update, but when the registration update message reaches the gNB, the gNB reports the location information TA1 of the current actual location of UE1. After receiving the message, the AMF finds that the RA includes TA1 and there is no need to perform registration update, and still sends the RA including TA1 to the UE. After receiving the RA, the UE finds that it still does not include TA2, and continues to send the registration update. In this way, the update process deadlocks.

The complexity of gNB processing is increased. First, the gNB needs to determine the TA where the UE is currently located. In addition, when receiving the paging request message from the AMF, due to the included TA of the actual location of the UE that may not be in the broadcast message of the current cell, the gNB needs to map the TA received from the AMF to a corresponding area, and then select a cell in the corresponding area to send the paging message.

When the UE is in a forbidden TA, the UE has no way of knowing when it can try to access the network again. Since a static UE sees different broadcasted TAs at different times, when a new TA appears, the UE will try to access, but every time the AMF receives the same TA sent by the gNB, and will reject the access, which will lead to a repetition state of constantly trying to access and denying access.

As shown in FIG. 4, a method for TA processing is provided by an embodiment of the present disclosure. The method is performed by a core network device, and includes:
S110: receiving a NAS request message and TA information of a first TA determined by an access network device for a user equipment UE; and
S120: sending a NAS message including the TA information of the first TA to the UE after the NAS request message.

The core network device involved in the embodiments of the present disclosure includes but is not limited to an AMF. Exemplarily, the core network device may further include a mobile management entity (MME). The access network device involved in the embodiments of the present disclosure includes but is not limited to a gNB.

The NAS request message may be any NAS request message sent by the UE. Exemplarily, the NAS request message includes but is not limited to: a service request (SR) request message, and/or a protocol data unit (PDU) session establishment request message.

When the core network device receives the NAS request message, it will also receive the TA information of the first TA determined for the UE by the access network device (for example, a base station). The base station may be a base station mounted on a non-terrestrial geosynchronous satellite.

The first TA may be: a TA where the UE is currently located, or a TA other than the TA where the UE is currently located. The first TA may be any TA determined by the access network device according to a first TA determination policy of the UE. Exemplarily, the first TA may include any one of TAs indicated in TA information broadcasted by the access network device and currently received by the UE, or the first TA may be not included in the TA information broadcasted by the access network device and currently received by the UE, but represents a TA where the UE is currently actually located.

The TA information here includes but is not limited to any kind of TA identity, and the TA identity may be a TA code or a TA identity (ID).

After receiving the NAS request message, a NAS message including the TA information of the first TA will be sent to the UE, and the NAS message includes the TA information of the first TA, so that the UE may receive the TA information of the first TA, and know the TA information of the first TA currently determined by the network side for the UE. In this way, on the one hand, it can reduce unnecessary registration updates of the UE caused by the TA information broadcasted by the communication satellite during handover, and can also reduce FA oscillation.

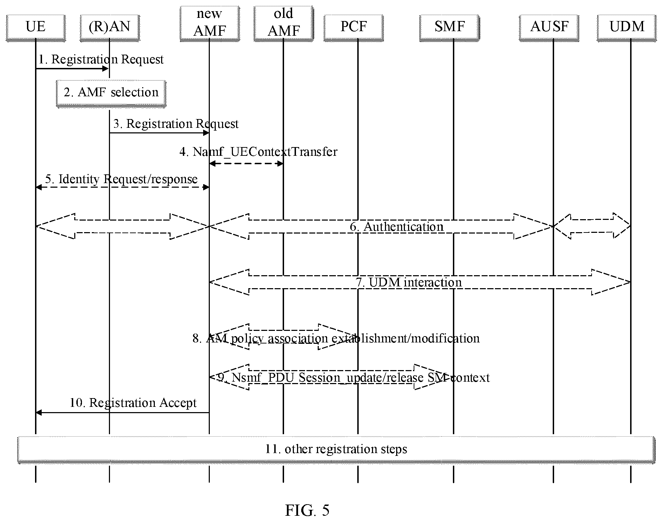

As shown in FIG. 5, a UE registration update procedure may include:
1) A UE sends a registration request message to an access network (AN) or radio access network (RAN) device. The message includes AN parameters, registration type, subscription concealed identifier (SUCI) or 5 generation temporary UE identity (5G-GUTI) or paging early indication (PEI), requested network slice selection assistance information (NSSAI), last access available tracking area identification (TAI), etc.
   The registration type indicates whether the terminal is to perform an initial registration, a mobile registration update, a periodic registration update, or an emergency registration. To help the AMF determine the registration area for the UE, the last visited TAI may be included.
2) (R)AN selects an AMF according to (R)AT and requests NSSAI. When the (R)AN cannot select an appropriate AMF, the AN/RAN forwards the registration request message to the AMF configured in the (R)AN.
3) (R)AN sends N2 message to a new AMF. The message includes N2 parameters, a registration request, and the like. The N2 parameter includes a selected PLMN ID, location information and a unit identity related to a unit where the UE is located.
4) If an AMF in service has changed since the last registration process, the new AMF may retrieve saved SUPI and UE context of the UE from the old AMF.
5) If the terminal does not provide a SUCI, or retrieves a SUCI from the old AMF, the new AMF initiates an identity request procedure to the terminal to request a SUCI.
6) The new AMF may decide to start UE authentication by invoking an AUSF. The AMF selects the AUSF according to the SUPI or SUCI.
7) If the AMF has changed since the last registration procedure, or if the SUPI provided by the UE does not refer to a valid context in the AMF, the SUPI-based AMF selects a UDM and registers with the UDM. If the AMF does not have subscription data for the UE, the AMF retrieves access and mobility subscription data and the like from the UDM.
8) The new AMF performs AM policy association establishment/modification for a policy control function (PCF).
9) If the registration request in step 1 includes a list of PDU sessions to be activated, the AMF will send an Nsmf_PDUSession UpdateSMContext request to a session management function (SMF) related to the PDU session to activate a user plane connection of these PDU sessions.
10) The new AMF sends a registration accept message to the terminal, indicating that the registration request has been accepted. The content of the message includes area information of the registration area, information of mobility restriction, an allowed NSSAI, a registration timer indication of a strict period, etc. If the AMF allocates a new registration area, it needs to send the area information of the registration area to the terminal. If the area information of the registration area is not included in the registration accept message, the terminal will consider the old registration area as valid. The information of mobility restriction is included if the mobility restriction applies for the terminal and the registration type is not emergency registration.
11) Additional steps for the registration update.

In some embodiments, the S120 may include:
determining whether the first TA is included in a registration area (RA) and/or a forbidden area (FA) of the UE according to the TA information,
sending the NAS message including the TA information of the first TA to the UE according to a determined result.

After receiving the TA information of the first TA, the core network device such as the AMF will determine whether the first TA is included in the RA or the FA of the UE according to the TA information. For example, if the first TA is not included in the RA, it means that the UE needs to update the registration area; if the first TA is included in the FA, then the UE needs to be forbidden from accessing the network in the first TA.

Therefore, the AMF will send the NAS message to the UE according to the determined result. Exemplarily, it is determined to send different NAS messages including the TA information of the first TA to the UE according to the determined result, or it is determined the message content of the NAS message sent to the UE according to the determined result. For example, although all NAS messages have a same information format, the content of the messages is different.

The determined result may include at least one of:
the first TA is included in the RA;
the first TA is included in the FA;
the first TA is not included in the RA and is not included in the FA; or
a TA included in the RA is different from a TA included in FA.

In some embodiments, regardless of whether the determined result is any of the above, the TA information of the first TA will be sent to the UE, and the difference of the determined result only determines the type and/or message content of the NAS message sent to the UE by the core network device such as AMF.

Exemplarily, S120 may include:
sending a triggering message carrying the TA information of the first TA to the UE, in which the triggering message is configured to trigger the UE to initiate a registration update;
   or,
sending a NAS response message carrying the TA information of the first TA for the NAS request message to the UE.

The triggering message that triggers the UE to initiate the registration update is one of the above NAS messages. For example, after receiving the NAS request message and the TA information of the first TA, the AMF responds to the NAS request message, and sends the triggering message to the UE according to whether the first TA is included in the RA or FA after completing the NAS request message. Alternatively, after receiving the NAS request message and the TA information of the first TA, the AMF first determines whether the TA information of the first TA is included in the RA or FA, and if the first TA information is not included in the RA and FA, the AMF first responds to the NAS request message and then sends the triggering message to the UE, and the UE initiates the registration update based on the triggering message, and resends the NAS request message after the registration update is completed.

In short, in the embodiments of the present disclosure, the triggering message may carry the TA information of the first TA as a kind of the above NAS message.

In another embodiment, the NAS message is a response message for the NAS request, that is, the NAS response message.

The NAS response message may be a NAS response success message or a NAS request rejection message. That is, the NAS response message includes at least one of: a NAS response success message sent to the UE after a response success for the NAS request message; a NAS request rejection message sent to the UE after a response failure for the NAS request message.

Specifically, whether the NAS response message is a NAS response success message or a NAS request rejection message is related to the response result for the NAS request message, and/or is related to whether the first TA is included in the FA and/or RA.

In an embodiment, whether the NAS response message is a NAS response success message or a NAS request rejection message is determined independently by the response result, but the NAS response message will carry the TA information of the first TA. For example, if there is a response success for the NAS request message, the NAS response success message is sent to the UE, and the NAS response success message includes the TA information of the first TA. At the same time, according to the determined result of whether the first TA is included in the RA and FA, the NAS response success message carries one or more bits to indicate the determined result. If there is a response failure for the NAS request message, the NAS request rejection message is sent to the UE. The NAS request rejection message indicates that the NAS response fails, and also carries the TA information of the first TA, and indicates the determined result of whether the first TA is included in the RA and FA. In this case, when the UE receives the NAS response message, it not only knows the response result of the network side to the NAS request message, but also knows the TA information of the first TA and knows the determined result of whether the first TA determined by the network side is included in the FA and/or TA. It is convenient for the UE to determine whether to perform registration update and whether it is located in an area forbidden from accessing the network according to the determined result.

In another embodiment, whether the NAS response message is a NAS response success message or a NAS request rejection message may depend solely on the determined result (or as a judged result) of whether the first TA is included in the RA and/or FA. If the first TA is included in the RA, the NAS response success message is sent to the UE; if the first TA is not included in the RA, the NAS request rejection message is sent to the UE. Exemplarily, according to whether the first TA is included in the FA, the message content of the NAS request rejection message may be determined when the first TA is not included in the RA.

In a word, in the embodiment of the present disclosure, the NAS response message can be configured to carry the determined result of whether the first TA is included in the RA and/or the RA, which has the characteristics of little change in the solution and strong compatibility with the existing technology.

Exemplarily, the NAS request rejection message further includes: a rejection cause.

In response to determining that the first TA is not included in the RA and the first TA is not included in the FA of the UE, the rejection cause has a first value, indicating that the first TA is not included in the RA and is not included in the FA.

In response to determining that the first TA is not included in the RA and is included in the FA, the rejection cause has a second value and is configured to indicate that the first TA is included in the FA and the UE is forbidden from accessing a network at the first TA.

The rejection cause may correspond to the above rejection cause code (Rejection cause code) or (reason code).

For example, after receiving the NAS request message, the core network device such as the AMF determines whether to respond to the NAS request message according to the determined result of whether the first TA is included in the RA and/or FA of the UE. If the first TA is not included in the RA of the UE recorded on the network side, a NAS request rejection message will be returned to the UE, and the NAS request rejection message will carry the rejection cause code. The rejection cause code indicates the rejection cause. It is worth noting that: the reject reason code at least indicates that the first TA is not included in the RA of the UE, or that the UE requires a registration update. Of course, if the first TA is not included in the RA of the UE and is not included in the FA, the rejection cause is different from that when the first TA is not included in the RA of the UE but is included in the FA. At the same time, the rejection cause code carried in the NAS request rejection message is also different.

Therefore, as mentioned above, if the first TA is not included in the RA and the FA, then the rejection cause has the first value; the first TA is not included in the RA but is included in the FA, the rejection cause has the second value, and the second value is different from the first value. For example, assuming that the rejection cause corresponds to 1 bit, for the two bit values of this bit, "0" may be one of the first value and the second value, and "1" is another of the first value and the second value.

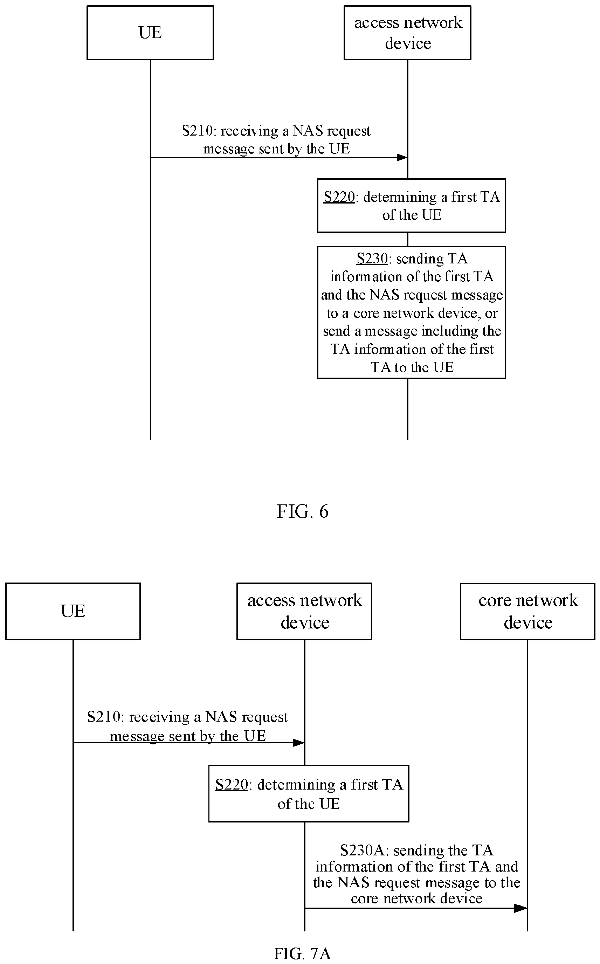

As shown in FIG. 6, a method for TA processing is provided by an embodiment of the present disclosure. The method is performed by an access network device, and the method includes:
S210: receiving a NAS request message sent by a UE;
S220: determining a first TA of the UE;
S230: sending TA information of the first TA and the NAS request message to a core network device, or send a message including the TA information of the first TA to the UE.

The access network equipment includes but is not limited to: a base station, such as an eNB or gNB.

When the access network device such as a base station receives the NAS request message sent by the UE, it will determine the first TA of the UE, for example, according to one or more of a current location of the UE, TA information broadcasted by the access network device, and/or the RA of the UE, configuration information of the network access device itself and a TA determination policy of the UE.

Exemplarily, if the TA determination policy indicates to select preferentially from TA information of a broadcasted TA (a second TA), the UE selects from the broadcasted TA information. For example, TA information of the TA1 and TA2 is broadcast, and the RA of the UE is TA1, regardless of the current location of the UE, a TA indicated by the broadcasted TA information and included in the RA is preferentially selected, that is, the first TA is selected as the TA1. For another example, the TA information of the TA1 and TA2 is broadcasted, the RA of the UE is TA3, and a TA where the UE is currently located is TA1, then a TA indicated by the broadcasted TA that matches the TA where the UE is currently located is selected, that is, the first TA is selected as TA1. For another example, the TA information of TA1 and TA2 is broadcasted, the RA of the UE is TA3, and the TA where the UE is currently located is TA3, then a TA is randomly selected from the TAs indicated by the broadcast TA information, that is, the first TA is selected as TA1.

Exemplarily, if the TA determination policy indicates to determine a TA where the UE is currently located, then the TA where the UE is currently located is determined according to the location of the UE, and the TA where the UE is currently located is determined as the first TA.

Of course, the above is only an example, and the specific implementation is not limited thereto.

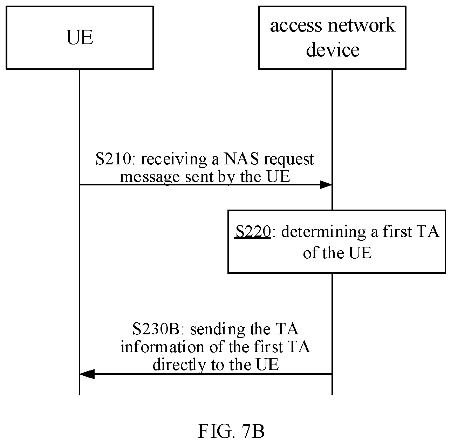

In some embodiments, as shown in FIG. 7A, the S230 may include:
S230A: sending the TA information of the first TA and the NAS request message to the core network device. The TA information of the first TA will be subsequently returned to the UE by the core network device.

As shown in the figure, the S230 may include:
S230B: sending the TA information of the first TA directly to the UE. The TA information carrying the first TA may be any of the following messages:
an RRC message;
a MAC message;
downlink control information (DCI) and the like.

If the base station determines that the TA information of the first TA is directly sent to the UE without returning to the UE via the core network, the transmission path is shortened, unnecessary transmission is reduced, and the UE can also receive the TA information of the first TA determined by the access network device as quickly as possible.

S130B here may include: unicasting the TA information of the first TA to the UE.

In some embodiments, the S120 may include:
determining the first TA according to second TA information broadcasted by a cell and/or location information of the UE and/or RA information of the UE.

The RA information indicates the RA of the UE, in which the RA includes one or more TAs.

The second TA information broadcasted by the cell may be second TA information broadcasted by the cell last time, the second TA information indicates the second TA, and the second TA includes one or more TAs.

In some embodiments, the S120 may include: the base station and other access network devices periodically determine the TA information of the first TA of the UE, and/or, the base station and other access network devices receive the NAS request message sent by the UE and determines the TA information of the first TA of the UE. If the access network device periodically determines the TA information of the first TA of the UE, the period for determining the TA information of the first TA may be the same as the period for the access network device to broadcast the TA information of the second TA.

If the base station and other access network devices determine the TA information of the first TA of the UE when receiving the NAS request message, unnecessary determination of the first TA can be reduced.

There are many ways for the base station and other access network device to determine the first TA. Specifically, the first TA may be determined according to at least one of the second TA information last broadcasted by the cell before the current moment, the location information of the UE, and the RA information of the UE.

Exemplarily, S120 may include:
when determining according to the location information of the UE that the TA where the UE is actually located has not changed with respect to the previous determination, any TA from the RA of the UE is selected as the first TA;
when determining according to the location information of the UE that the TA where the UE is currently located has changed with respect to the previous determination, the TA where the UE is currently located is determined as the first TA;
any TA in the RA of the UE is determined as the first TA, according to the location information of the UE and the TA where the UE is currently located being in the RA of the UE;
the TA where the UE is currently located is determined according to the location information of the UE, and the TA where the UE is currently located is determined as the first TA;
of course, the above are all specific examples of determining the first TA, and specific implementations are not limited to the above examples.

In some embodiments, the second TA information broadcasted by the cell in a first mode includes TA information of a single TA;
or,
the second TA information broadcasted by the cell in a second mode includes TA information of more than one TA.

The first mode is a single TA mode, that is, in the first mode, the communication satellite only broadcasts TA information of one TA. The first mode here may be the mode A in the foregoing embodiments.

The second mode is a multi-TA mode, that is, in the second mode, if the communication satellite covers more than one TA at the same time, it will broadcast the TA information of the more than one TA covered by itself. The second mode here can be regarded as the aforementioned mode B.

In some embodiments, the location information of the UE includes:
location information reported by the UE;
   or,
location information determined based on a measurements of the access network device.

The UE may report its own location information through satellite positioning or triangulation with the base station. The location information may be used by the access network device to determine the TA where the UE is currently located and/or the first TA.

For example, the access network device sends a reference signal, and determines the relative position between the UE and the access network device based on the reception of the reference signal, so as to determine the position information of the UE in combination with the position information of the base station.

There are many ways to express the location information. For example, the location information of the UE may be latitude and longitude, or any other information indicating location information. For another example, the location information of the UE includes but is not limited to: a cell number of a cell where the UE is located.

In some embodiments, the RA information of the UE includes:
the RA information received from the UE;
   or,
the RA information received from the core network device.

The RA where the UE is located is indicated by the RA information of the UE. The RA information may be sent by the core network device to the access network device, or may be received RA information reported by the UE.

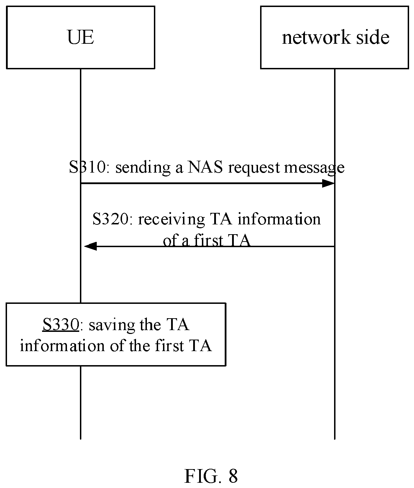

As shown in FIG. 8, a method for TA processing is provided by an embodiment of the present disclosure. The method is performed by a UE, and the method includes:
S310: sending a NAS request message;
S320: receiving TA information of a first TA, in which the first TA is determined by an access network device for the UE;
S330: saving the TA information of the first TA.

The UE sends the NAS request message to the network side to request the network to establish a corresponding NAS connection.

The NAS request message will trigger the access network device to determine the first TA for the UE.

After receiving the NAS request message, the access network device will determine the first TA of the UE. After the UE sends the NAS request message, it will receive the TA information of the first TA sent by a core network device or the access network device.

If the TA information of the first TA is sent by the core network device, a message carrying the TA information of the first TA may be any form of NAS message. If the TA information of the first TA is sent by the access network device, the TA information carrying the first TA may be an RRC message, a MAC message, or a physical layer message.

In some embodiments, the S320 may include:
receiving a NAS message including TA information of the first TA;
   or,
receiving a message sent by an access network device that includes the TA information of the first T A.

In some embodiments, the method also includes:
sending, by a NAS layer in the UE, the TA information of the first TA to an AS layer of the UE.

The TA information of the second TA here may be TA information broadcasted by the access network device to all UEs in the cell.

The TA information of the second TA received by the UE is stored in the NAS layer. Then, after receiving the TA information of the first TA, the TA information of the first TA will be sent to the AS layer.

In some embodiments, receiving the NAS message including the TA information of the first TA includes:
receiving a triggering message carrying the TA information of the first TA returned after sending the NAS request message, in which the triggering message is configured to trigger the UE to perform a registration update;
   or,
receiving a NAS response message carrying the TA information of the first TA for the NAS request message.

In some embodiments, after receiving the triggering message sent by the core network device, the UE will initiate a registration update based on the triggering message, so as to update the RA of the UE saved in the core network and/or locally by the UE.

In some other embodiments, the UE will receive the NAS response message including the TA information of the first TA. The NAS response message is a response message for the NAS request message. For example, the NAS request message is a service request (SF) message, and the NAS response message may be an SF response message. If the NAS request message is a PDU session establishment request message, the NAS response message may be a PDU session establishment response message for the PDU session establishment request message.

In some embodiments, the NAS response message includes:
a NAS response success message of a response success for the NAS request message;
   or,
a NAS request rejection message.

The TA information of the first TA carried in the NAS response message may be TA information of the TA where the UE is currently located. If the UE receives the NAS response success message including the TA information of the first TA, the UE saves the TA information of the first T A.

If the UE receives the NAS request rejection message, according to a rejection code corresponding to a rejection cause of the NAS request rejection message, it knows that the first TA of the UE is not included in the RA and is not included in the FA and needs to initiate a registration update, or it knows that the first TA is included in FA and needs to stop network access.

The NAS request rejection message includes:
a NAS request rejection message carrying a rejection cause being a first value or a second value.

The rejection cause has a first value that the first TA is not included in the RA and the first TA is not included in the FA of the UE;
or,
the rejection cause has a second value that the first TA is included in the FA.

The first value and the second value are different values, for example, the first value and the second value are both indicated by one bit. When the first value is "0", the second value is "1"; When the first value is "1", the second value is "0". Of course, the number of bits corresponding to the rejection cause is not limited to 1, and the specific values of the first value and the second value are not limited to "0" and "1".

Exemplarily, the method also includes:
in response to the rejection cause having the first value, initiating, by the UE, a registration update procedure, and receiving and storing updated RA information from the core network device after the registration update is successful.
   or,
in response to the rejection cause having the second value, updating, by the UE, saved FA information to include the TA information of the first TA, and forbidding the UE from initiating a network request message.

In an embodiment, after the UE completes the processing of the first TA, the processing of the first TA includes: the UE saves the first TA and adds the TA information of the first TA into RA information or FA information of the UE.

Here, after receiving the TA information of the first TA sent by the core network device or the access network device, the UE will save the TA information, and optionally completes adding the TA information to the RA information or FA information stored by itself.

If the TA information is added to the RA information saved by itself, it is equivalent to completing a registration update of the UE; if the TA information is added to the FA information, it is equivalent to updating the FA information once, so that the number of registration updates initiated by the UE caused by updating the RA and FA of the UE are reduced.

The second TA before the processing of the first TA is: a TA indicated by the TA information broadcasted by the access network device and received by the UE before completing the processing of the first TA.

The second TA after the processing of the first TA is: a TA indicated by the TA information broadcasted by the access network device and received by the UE after completing the processing of the first TA.

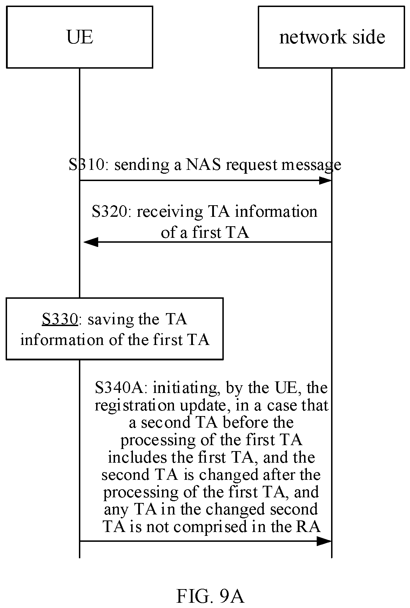

As shown in FIG. 9A, after the UE completes the processing of the first TA, the method further includes:
S340A: initiating, by the UE, the registration update, in a case that a second TA before the processing of the first TA includes the first TA, the first TA is not included in the FA, and the second TA is changed after the processing of the first TA, and any TA in the changed second TA is not included in the RA, in which the second TA is a TA indicated by TA information broadcasted by the access network device.

In this case, the change of the second TA indicates that the UE or the satellite has moved, that is, the first TA of the UE may be changed.

Exemplarily, the UE sends a registration update request, and after receiving the registration update request, the network side completes the re-registration update procedure through information interaction with the UE, thereby updating the RA information and/or FA information and/or SAE information of the UE again.

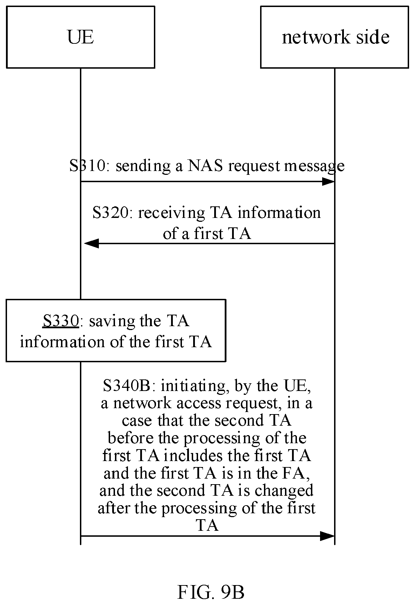

As shown in FIG. 9B, after the first UE completes the processing of the first TA, the method further includes:
S340B: initiating, by the UE, a network access request, in a case that the second TA before the processing of the first TA includes the first TA and the first TA is in the FA, and the second TA is changed after the processing of the first TA.

In this case, the second TA has changed, indicating that the UE or the satellite has moved, that is, the first TA of the UE may be changed, and whether the first TA of the UE changes requires the UE to initiate a network access request, and is determined by the access network device according to the first TA determination policy.

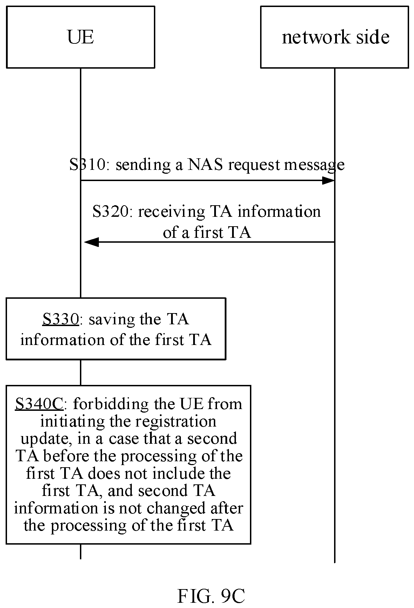

In some embodiments,
As shown in FIG. 9C, after the UE completes the processing of the first TA, the method further includes:
S340C: forbidding the UE from initiating the registration update, in a case that a second TA before the processing of the first TA does not include the first TA, and second TA information is not changed after the processing of the first TA.

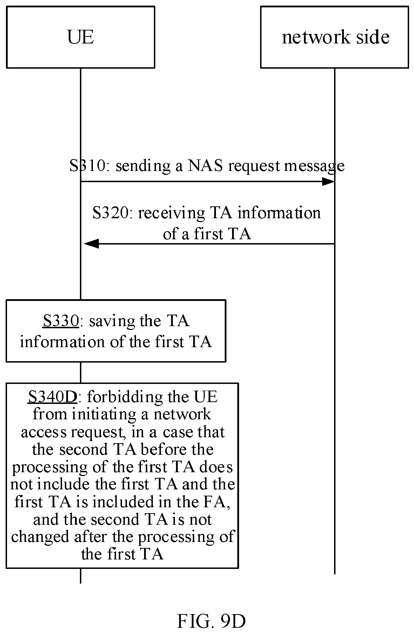

As shown in FIG. 9D, after the UE completes the processing of the first TA, the method further includes:
S340D: forbidding the UE from initiating a network access request, in a case that the second TA before the processing of the first TA does not include the first TA and the first TA is included in the FA, and the second TA is not changed after the processing of the first TA.

The second TA determined by the TA information broadcasted by the cell and received by the UE before and after completing the processing of the first TA has not changed, and the access network device determines that the UE is currently in the first TA, and the first TA is not currently included in the RA of the UE, since the first TA is confirmed by the core network or access network equipment, the UE does not need to initiate unnecessary registration updates at this time, so the registration updates of the UE will be forbidden, thereby reducing unnecessary registration updates.

In a case that the second TA before completing the processing of the first TA does not include the first TA, and the first TA is included in the FA, and there is no change before and after the UE completes the processing of the first TA, if the UE continues to try to access the first TA, unnecessary sending of network access requests and interference to the wireless environment will be caused. Therefore, the UE is forbidden from initiating network access requests.

In some embodiments, after the UE completes the processing of the first TA, the method further includes:
initiating, by the UE, the registration update, in a case that a second TA before the processing of the first TA does not include the first TA and the second TA is changed after the processing of the first TA, and the changed second TA does not include the first TA; this case indicates that the UE or the satellite has moved, that is, the first TA of the UE may be changed;
   or,
initiating, by the UE, a network access request, in a case that the second TA before the processing of the first TA does not include the first TA and the first TA is included in the FA, and the second TA is changed after the processing of the first TA and the changed second TA does not include the first TA. This case indicates that the UE or the satellite has moved, that is, the first TA of the UE may be changed. Whether the first TA of the UE changes requires the UE to initiate a network access request, and is determined by the access network device according to the first TA determination strategy.

The embodiments of the present disclosure provide an improved method for TA processing. The gNB (NG-RAN) determines the current TA of the UE and reports it to the AMF. After the AMF completes the processing of the NAS request message or before the AMF completes the processing of the NAS request message, the first TA of the UE is sent to the user equipment, so as to solve problems such as frequent registration updates and/or FA control caused by the inconsistency between the TA information acquired by the UE and the TA information used by the network.

The AMF receives the first TA of the UE from the gNB, and the AMF returns the TA information of the first TA to the corresponding UE after the NAS request message is processed or before the AMF completes the NAS request message processing.

The first TA of the UE is determined by the gNB according to one or more of the TA information received by the UE (here, the TA information received by the UE is the TA information broadcasted by the cell), the RA information, and the location information of the UE.

The TA information received by the UE is TA information broadcasted by the cell to the UE, including a single TA or more than one TA. In mode A, the cell broadcasts TA information of a single TA; in mode B, the cell broadcasts TA information of more than one TA.

The RA information of the registration area is provided to the gNB by the UE, or provided to the gNB by a core network device (such as AMF).

The location information of the UE is provided by the UE to the gNB, or obtained by the gNB based on a measurement or configuration techniques.

The TA information of the first TA of the UE is sent to the AMF by the gNB together with the NAS request message.

The NAS request message includes a service request message, or a PDU session operation request message, such as a PDU session establishment request.

After the NAS processing is completed, the AMF returns the first TA of the UE to the corresponding UE, including: the NAS processing is successful, and the AMF make the NAS request success response message include the first TA of the UE and sends it to the UE; or the NAS processing is failed, and the AMF make the NAS request rejection message include the first TA of the UE and sends it to the UE.

If the response to the NAS request message fails, the NAS request rejection message includes the first TA of the UE and also includes a rejection cause. The rejection cause is that the first TA of the UE is not in the RA and registration update is required, or that the first TA of the UE is in the FA and access is forbidden.

After the response of the NAS request message is completed, the AMF returns the first TA of the UE to the corresponding UE, and further includes: the AMF may also make the triggering message that triggers the user to initiate a registration update include the first TA of the UE, and sent it to the UE.

After the UE receives the first TA of the UE sent by the AMF, the method includes: the UE sends the TA information of the first TA of the UE at the NAS layer to the AS layer of the UE for processing.

After the AMF returns the first TA of the UE to the corresponding UE, the method further includes: if the UE receives the response message of NAS request rejection, the UE determines according to the returned rejection cause, the first TA of the UE, the broadcasted TA, the RA and the FA. If the first TA of the UE is not included in the RA and not included in the FA, and the rejection cause is not access forbidding, the UE sends a registration update request to the AMF, so the AMF updates the RA to include the first TA of the UE, and returns the updated RA to the UE.

After the AMF returns the first TA of the UE to the corresponding UE, the method further includes:
If the UE receives the response message of NAS request rejection, the UE determines according to the returned rejection cause, the first TA of the UE, the second TA indicted by the broadcasted TA information, the RA and the FA. If the first TA of the UE is forbidden from accessing, the UE updates the FA, adds the TA information of the first TA to the FA information, and the UE no longer initiates a network access request. The broadcasted TA information is the TA information broadcasted by the cell.

After the UE completes the processing of the first TA (that is, receiving the TA information of the first TA from the network side and adding the TA information of the first TA to the RA information or FA information), in a case that the second TA indicated by the broadcasted TA information and received by the UE does not include the first TA of the UE (according to the method described in claim 2, the first TA of the UE determined by the gNB is not included in the broadcasted TA information), and the broadcasted TA information does not change, then the UE ignores the inconsistency between the broadcasted TA and the first TA of the UE, that is, if the first TA of the UE is included in the RA, even if the RA does not include any TA in the broadcasted TA, the UE does not initiate a registration update; or if the first TA of the UE is included in the FA, the UE will not initiate a network access request.

After the UE completes the processing of the first TA (that is, receiving the TA information of the first TA from the network side and adding the TA information of the first TA to the RA information or FA information), in a case that the broadcast TA received by the UE does not include the first TA of the UE, the TA information of the first TA of the UE determined by the gNB is not included in the broadcasted TA information, and the broadcasted TA information changes (that is, the satellite cell has a TA coverage change, or the UE has performed cross-TA movement) and the second TA indicated by the changed broadcasted TA information does not include the first TA of the UE, then if the first TA of the UE is included in the RA, the UE initiates a registration update; or if the first TA of the UE is included in the FA, and the UE initiates a network access request.

After the UE completes the processing of the first TA (that is, receiving the TA information of the first TA from the network side and adding the TA information of the first TA to the RA information or FA information), in a case that the second TA indicated by the broadcasted TA information received by the UE includes the first TA of the UE, the first TA of the UE determined by the gNB selects the TA information of the first TA from the broadcasted TA information, and the TA information of the first TA of the UE is added into the FA information, when the broadcasted TA information changes, the UE initiates a network access request; or the first TA of the UE is included in the RA, then when the broadcasted TA information changes, and the when any TA in the broadcasted TA information is not included in the RA, the UE initiates a registration update.

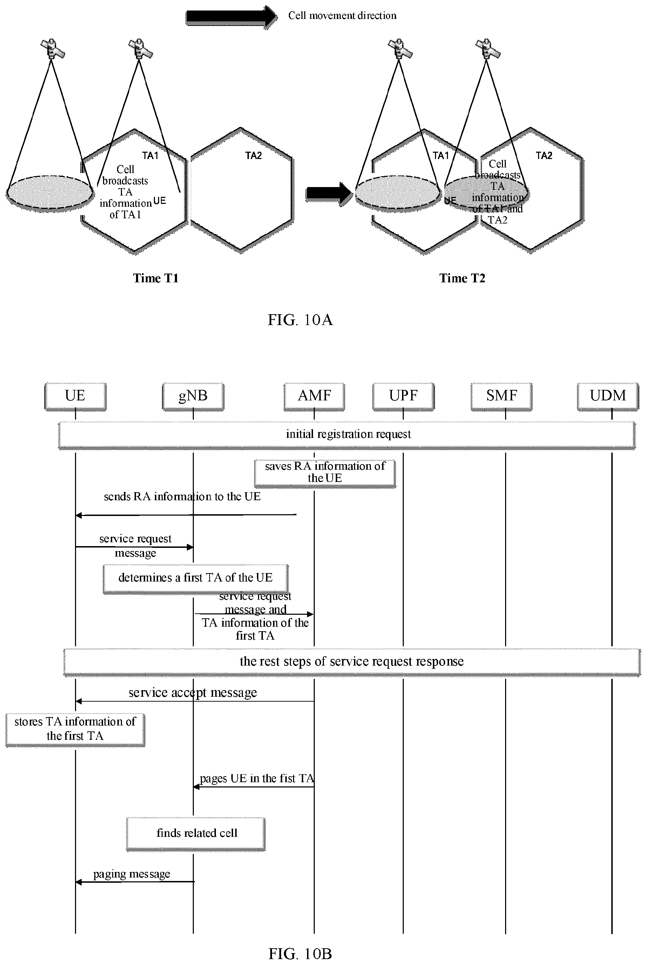

As shown in FIGS. 10A and 10B, at time T1, a UE accesses a network and completes an initial registration. At T2, the UE initiates a service request, and the AMF needs to determine whether to accept the service request of the UE according to the a TA of the UE provided by a gNB, and returns the first TA of the UE to the UE. The process of UE initiating a service request and the network side initiating paging to the UE is shown in FIG. 4.

At time T1, the UE accesses the network through the satellite and completes the initial access registration process.

When processing the registration request of the UE, the AMF determines the registration area (RA) of the UE. The RA information includes TA1.

The AMF makes RA=TA1 to be included in a registration accept message and returns the registration accept message to the UE. The UE saves the RA information.

At time T2, the UE initiates a service request message.

After receiving the message, if the RA includes TA1, the gNB determines that the first TA of the UE is TA1 according to broadcasted TA information (the TA information indicates TA1 and TA2) and the UE location information.

The gNB sends the first TA of the UE and the service request message to the AMF.

The AMF receives the NAS request message, determines that the first TA of the UE is included in the RA, and completes processing of the service request.

The AMF returns to the UE a service accept message that includes the first TA of the UE=TA1.

The UE receives the service accept message, and saves the first TA of the UE. The UE selects a TA consistent with the first TA of the UE at the NAS layer, and sends it to the AS layer for processing.

If an AMF paging request message is received, the message is sent to the gNB and includes the first TA of the UE.

The gNB finds a corresponding cell according to the first TA of the UE.

The corresponding cell initiates a paging message to the UE, so as to complete the paging.

Afterwards, if the TA information broadcasted by the cell changes, and any TA in the changed broadcasted TA information is not included in the RA, the UE needs to initiate a registration update request and request the AMF to update the RA. If a TA in the changed broadcast TA information is included in the RA, the UE will not initiate a registration update.

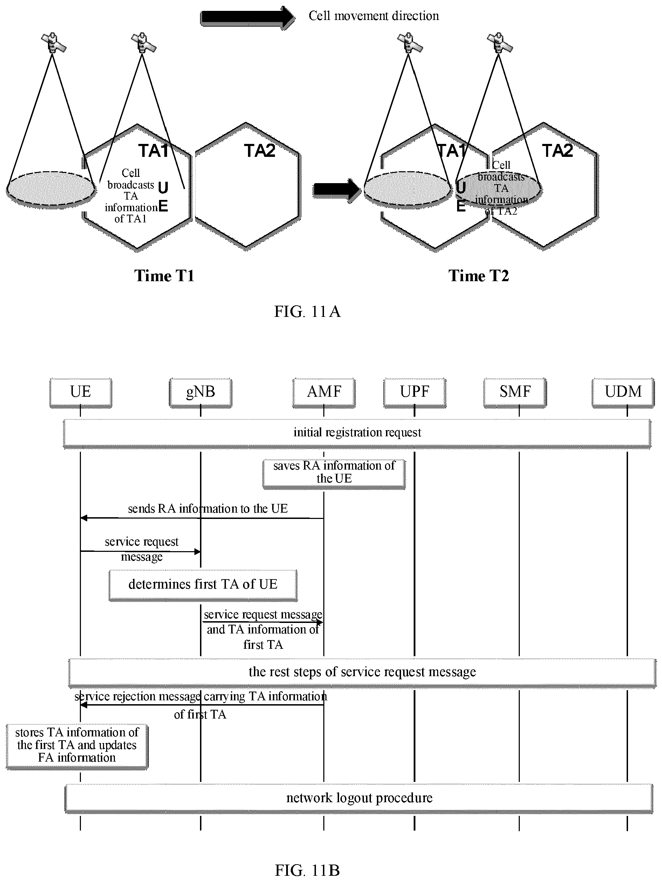

As shown in FIGS. 11A and FIG. 11B, at time T1, a UE accesses a network and completes an initial registration. At time T2, the UE initiates a service request, and an AMF needs to determine whether to accept the service request of the UE according to a first TA of the UE provided by the gNB, and returns the first TA of the UE to the UE. The process of the UE initiating the service request is shown in Figure 11B.

At time T1, the UE accesses the network through the satellite and completes the initial access registration process.

When processing the registration request of the UE, the AMF determines the registration area RA of the UE. The RA information includes TA1.

The AMF makes the RA being TA1 to be included in the registration accept message and returns the registration accept message to the UE. The UE saves the RA information.

At time T2, the UE initiates the service request message.

After receiving the message, according to broadcasted TA information (TA2), the RA being TA1, and UE location information, the gNB determines that the first TA of the UE is TA2. The process of the gNB determining the first TA of the UE is implemented by the internal processing of the gNB. In the embodiment, according to the UE location information and the broadcasted TA information, it is determined that even if an actual location of the UE is in TA1, TA2 is broadcasted to the UE at this time. The gNB selects TA2 from the broadcasted TA as the first TA of the UE.

The gNB sends the first TA of the UE together with the service request message to the AMF.

The AMF receives the NAS request message, determines that the first TA of the UE is TA2 and is not included in the RA, and the first TA of the UE=TA2 means that the UE is forbidden from accessing the network, and the AMF completes the processing of the service request.

The AMF returns a service rejection message to the UE, the message including that the first TA of the UE is TA2, and the returned rejection cause is that the UE is forbidden from accessing the network in the current area.

The UE receives the service rejection message, saves the first TA of the UE=TA2, and performs a FA update, and adds the first TA of the UE as TA2 in the FA. The UE no longer initiates any network access request message.

The network side initiates the UE de-registration process.

Afterwards, if the TA information broadcasted by the cell changes, it means that the UE has moved or the cell has moved. At this time, the UE initiates a network access request again, and the network processes the UE access request according to the relevant procedures.

If the TA information broadcasted by the cell has not changed, even as shown in FIG. 3, at time T2, assuming that the cell broadcasts TA information of TA1 and TA2, the first TA of the UE is TA1 and access is forbidden. When the UE attempts to use TA2 to access the network, since the first TA of the UE determined by the gNB is still TA1 (the broadcasted TA has not changed at this time, indicating that the UE has not moved across TAs or the cell has not moved), the UE attempting to use TA2 to access the network will still fails.

The AMF determines that the first TA of the UE is TA2 and is not included in the RA, and the first TA of the UE is TA2 to allow the UE to access the network, then the AMF rejects the service request of the UE.

The AMF returns a service rejection message to the UE, the message includes the first TA of the UE=TA2, and the returned rejection cause is that the UE needs to update the registration.

The UE receives the service rejection message and saves the first TA of the UE. At this time, the first TA is TA2. After that, the UE initiates the registration update procedure. After receiving the registration update request, the AMF updates the RA so that the RA includes TA2, and returns the updated RA to the UE, the UE saves the updated RA, and reinitiates the service request procedure. or

The AMF determines that the first TA of the UE is TA2, and the first TA is not included in the RA, and the first TA of the UE is TA2 to allow the UE to access the network, then the AMF accepts the service request of the UE.

The AMF returns a service accept message to the UE, the service accept message includes TA information of the first TA of the UE, and the TA information indicates TA2. The UE saves the TA information of the first TA of the UE.

Then AMF initiates a message for triggering a registration update. After the UE receives the triggering message, the UE initiates a registration update procedure. After receiving the registration update request, the AMF updates the RA information so that RA information includes TA2, and returns the updated RA information to UE. The UE saves the updated RA information, and re-initiate the service request process.

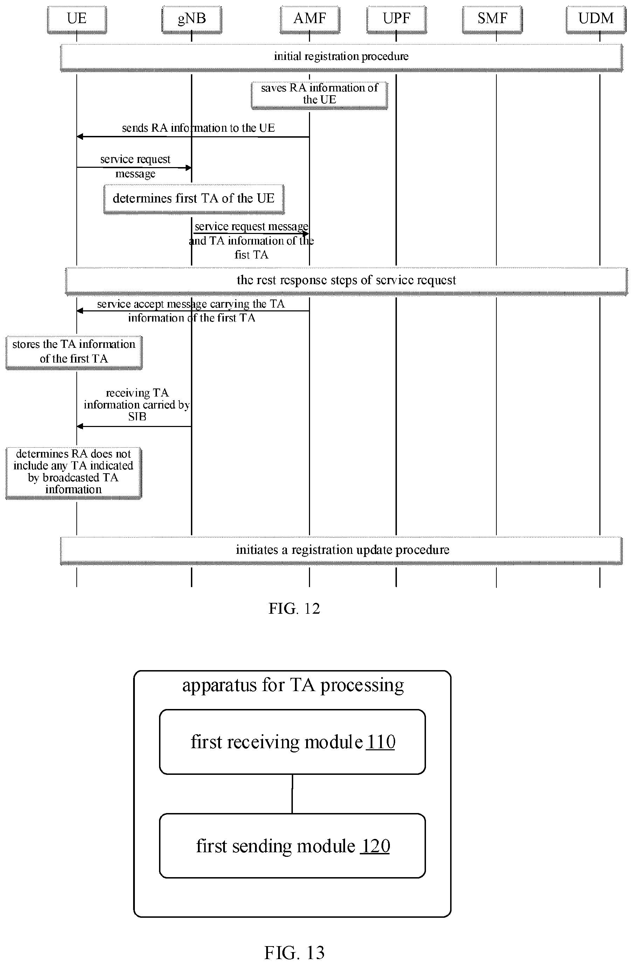

As shown in FIG. 11A, at time T1, a UE accesses a network and completes an initial registration. At time T2, the UE initiates a service request, and an AMF needs to determine whether to accept a service request of the UE according to a first TA of the UE provided by a gNB, and returns the first TA of the UE to the UE. The process of the UE initiating the service request is shown in FIG.12.

At time T1, the UE accesses the network through the satellite and completes the initial access registration process.

When processing the registration request of the UE, the AMF determines the registration area (RA) of the UE. The RA information includes TA1.

The AMF makes the RA being TA1 to be included in the registration accept message and returns the registration accept message to the UE. The UE saves the RA information.

The UE initiates a service request message at time T2.

After receiving the message, the gNB determines that the first TA of the UE is TA1 according to the broadcasted TA information (TA2), the RA being TA1, and the UE location information. The process of the gNB determining the first TA of the UE can be realized by an internal processing strategy of the gNB. The broadcast TA information may be carried in a system information block (SIB) and sent to the UE.

In the embodiment, it is determined that the actual location of the UE is in TA1 according to the UE location information, so even if the TA information of TA2 is broadcasted to the UE, the gNB still selects TA1 as the first TA of the UE.

The gNB sends the first TA of the UE together with the service request message to the AMF.

The AMF receives the NAS request message, determines that the first TA of the UE=TA1 is included in the RA, and the AMF completes the processing of the service request.

The AMF returns to the UE a service accept message including the first TA (TA1) of the UE.

The UE receives the service accept message, and saves the first TA (TA1) of the UE. At this time, although the broadcasted TA received by the UE is that TA2 is not included in the RA, the UE will not initiate a registration update.

When the TA broadcasted by the satellite cell to the UE changes, and the broadcasted TA does not include the first TA (TA1) of the UE after the change, for example, TA3 is broadcasted.

The UE receives the changed broadcast TA information, and determines that no TA in the broadcasted TA information is included in the RA.

The UE initiates a registration update request, and after the AMF updates the RA, it sends the updated the RA and the TA information of the first TA of the UE determined by the gNB to the UE. The UE saves the updated RA information and the TA information of the first TA of the UE.

If the broadcasted TA information of the satellite cell changes, but the second TA indicated by the changed broadcast TA information includes TA1, the UE will not initiate a registration update after receiving the broadcast TA information.

As shown in FIG. 13, an apparatus for TA processing is provided by an embodiment of the present disclosure provides. The apparatus is performed by a core network device, and the apparatus includes:
a first receiving module 110, configured to receive a non-access stratum (NAS) request message and TA information of a first TA determined by an access network device for a user equipment (UE);
a first sending module 120, configured to send a NAS message including the TA information of the first TA to the UE after the NAS request message.

In some embodiments, the first receiving module 110 and the first sending module 120 may include a program module; when the program module is executed by the processor, the reception of the TA information of the first TA and NA request message can be realized.

In some other embodiments, the first receiving module 110 and the first sending module 120 may include: a combination of hardware and software module; the combination of hardware and software module includes but is not limited to a programmable array; the programmable array includes but is not limited to: field programmable arrays and/or complex programmable arrays.

In some other embodiments, the first receiving module 110 and the first sending module 120 may include: pure hardware modules; the pure hardware modules include but are not limited to: various application specific integrated circuits.

In some embodiments, the first sending module 120 is configured to determine whether the first TA is included in a registration area (RA) and/or a forbidden area (FA) of the UE according to the TA information; and send the NAS message including the TA information of the first TA to the UE according to a determined result.

In some embodiments, the first sending module 120 is configured to send a triggering message carrying the TA information of the first TA to the UE, in which the triggering message is configured to trigger the UE to initiate a registration update; or send a NAS response message carrying the TA information of the first TA for the NAS request message to the UE.

In some embodiments, the NAS response message includes at least one of:
a NAS response success message sent to the UE after a response success for the NAS request message; or
a NAS request rejection message sent to the UE after a response failure for the NAS request message.

In some embodiments, the NAS rejection message further includes: a rejection cause;
in response to determining that the first TA is not included in the RA and the first TA is not included in the FA of the UE, the rejection cause has a first value to indicate that the first TA is not included in the RA and is not included in the FA of the UE; and
in response to determining that the first TA is not included in the RA and is included in the FA, the rejection cause has a second value, and is configured to indicate that the first TA is included in the FA and the UE is forbidden from accessing a network at the first TA.

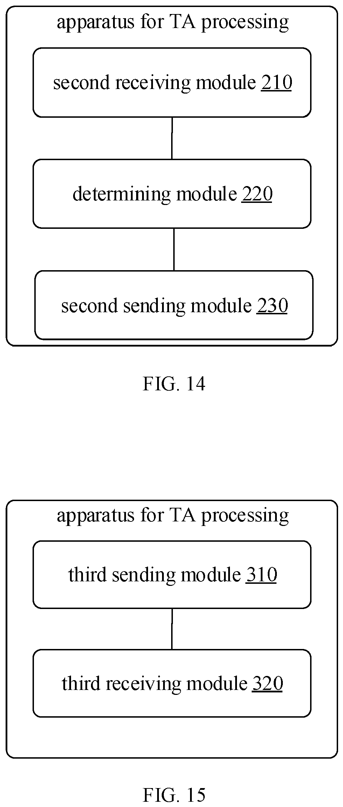

As shown in FIG. 14, an apparatus for TA processing is provided by an embodiment of the present disclosure. The apparatus is performed by an access network device, and includes:
a second receiving module 210, configured to receive a NAS request message sent by a UE;
a determining module 220, configured to determine a first TA of the UE; and
a second sending module 230, configured to send TA information of the first TA and the NAS request message to a core network device, or send the TA information of the first TA to the UE.

In some embodiments, the second receiving module 210, the determining module 220, and the second sending module 230 may include a program module; after the program module is executed by the processor, the reception of the TA information of the first TA and NA request message can be realized.

In other embodiments, the second receiving module 210, the determining module 220, and the second sending module 230 may include: a combination of hardware and software module; the combination of hardware and software module includes but is not limited to a programmable array; the programmable arrays include but are not limited to: field programmable arrays and/or complex programmable arrays.

In some other embodiments, the second receiving module 210, the determining module 220 and the second sending module 230 may include: pure hardware modules; the pure hardware modules include but are not limited to: various application specific integrated circuits.

In some embodiments, the determining module 220 is specifically configured to determine the first TA according to TA information of a second TA broadcasted by a cell and/or location information of the UE and/or RA information of the UE.

In some embodiments, the second TA information broadcasted by the cell in a first mode includes TA information of a single TA;
or,
the second TA information broadcasted by the cell in a second mode includes TA information of more than one TA.

In some embodiments, the location information of the UE includes:
location information reported by the UE;
   or,
location information determined based on a measurement of the access network device.

In some embodiments, the registration area (RA) information of the UE includes:
the RA information received from the UE;
   or,
the RA information received from the core network device.

As shown in FIG. 15, an apparatus for TA processing is provided by an embodiment of the present disclosure. The apparatus includes:
a third sending module 310, configured to send a NAS request message;
a third receiving module 320, configured to receive TA information of a first TA, in which the first TA is determined by an access network device for the UE; and
a saving module, configured to save the TA information of the first TA.

In some embodiments, the third sending module 310, the third receiving module 320 and the saving module may include a program module; after the program module is executed by the processor, the reception of the TA information of the first TA and NA request message can be realized.

In other embodiments, the third sending module 310, the third receiving module 320 and the saving module may include: a combination of hardware and software module; the combination of hardware and software module includes but is not limited to a programmable array; the programmable arrays include but are not limited to: field programmable arrays and/or complex programmable arrays.

In some other embodiments, the third sending module 310, the third receiving module 320 and the saving module may include: pure hardware modules; the pure hardware modules include but are not limited to: various application specific integrated circuits.

In some embodiments, the third receiving module 320 is configured to receive a NAS message including the TA information of the first TA; or receive a message sent by the access network device that includes the TA information of the first TA.

In some embodiments, the apparatus also includes:
a selection transmission module, configured to send, by a NAS layer in the UE, the TA information of the first TA to an AS layer of the UE.

In some embodiments, the third receiving module 320 is configured to receive a triggering message carrying the TA information of the first TA returned after sending the NAS request message, in which the triggering message is configured to trigger the UE to perform a registration update; or receive a NAS response message carrying the TA information of the first TA for the NAS request message.

In some embodiments, the NAS response message includes:
a NAS response success message of a response success for the NAS request message;
   or,
a NAS request rejection message.

In some embodiments, the NAS request rejection message includes:
a NAS request rejection message carrying a rejection cause being a first value or a second value;
in which,
the rejection cause has the first value that the first TA is not included in an RA and the first TA is not included in an FA of the UE;
   or,
the rejection cause has the second value that the first TA is included in the FA.

In some embodiments, the apparatus also includes:
in response to the rejection cause having the first value, initiating, by the UE, a registration update procedure, and receiving and storing updated RA information from the core network device after the registration update is successfully completed;
   or,
in response to the rejection cause having the second value, updating, by the UE, stored FA information to include the TA information of the first TA, and forbidding the UE from initiating a network request message.

In some embodiments, after the UE completes processing of the first TA, the first TA includes: the UE stores the first TA and adds the TA information of the first TA into RA information or FA information of the UE;
the apparatus further includes:
a first updating module, configured to initiate, by the UE, the registration update, in a case that a second TA before the processing of the first TA includes the first TA and the second TA is changed after the processing of the first TA, and any TA in the changed second TA is not included in the RA, in which the second TA is a TA indicated by TA information broadcasted by the access network device;
   or,
a first access module, configured to initiate, by the UE, a network access request, in a case that the second TA before the processing of the first TA includes the first TA and the first TA is in the FA, and the second TA is changed after the processing of the first TA.

In some embodiments, after the UE completes the processing of the first TA, the apparatus further includes:
a first forbidding module, configured to forbid the UE from initiating the registration update, in a case that a second TA before the processing of the first TA does not include the first TA, and second TA information is not changed after the processing of the first TA;
   or,
a second forbidding module, configured to forbid the UE from initiating a network access request, in a case that the second TA before the processing of the first TA does not include the first TA and the first TA is included in the FA, and the second TA is not changed after the processing of the first TA.

In some embodiments, after the UE completes the processing of the first TA, the apparatus further includes:
a second update module, configured to initiate, by the UE, the registration update, in a case that a second TA before the processing of the first TA does not include the first TA and the second TA is changed after the processing of the first TA, and the changed second TA does not include the first TA;
   or,
a second access module, configured to initiate, by the UE, a network access request, in a case that the second TA before the processing of the first TA does not include the first TA and the first TA is included in the FA, and the second TA is changed after the processing of the first TA and the changed second TA does not include the first TA.

A communication device is provided by an embodiment of the present disclosure. The device includes:
a memory for storing processor-executable instructions;
a processor, respectively connected to the memory;
the processor is configured to execute the terminal control method and/or the information processing method provided by any of the foregoing technical solutions.

The processor may include various types of storage media, which are non-transitory computer storage media, and may continue to memorize and store information thereon after the communication device is powered off.

Here, the communication device includes: an access network device or a UE or a core network device.

The processor may be connected to the memory through a bus, etc., for reading a executable program stored on the memory, for example, at least one of the methods shown in FIG. 4, FIG. 5 to FIG. 9D, FIG. 10B and/or FIG. 11B.

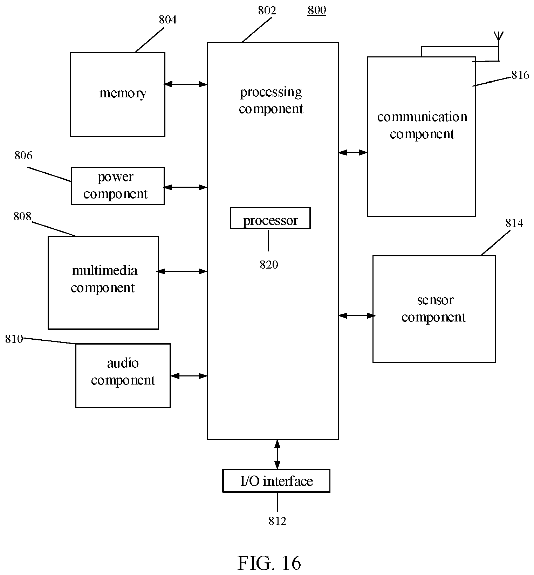

FIG. 16 is a block diagram of a UE 800 provided by an embodiment of the present disclosure. For example, the UE 800 may be a mobile phone, computer, digital broadcast terminal, messaging device, game console, tablet device, medical device, fitness device, personal digital assistant, and the like.

Referring to FIG. 16, the UE 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include at least one processor 820 to execute instructions to perform all or part of the steps in the above described method. Moreover, the processing component 802 may include at least one module which facilitates the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad of the UE 800, and the sensor component 814 may further detect a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The user equipment 800 can access a wireless network based on a communication standard, such as WiFi, 2G or 3G, or a combination thereof. In an exemplary embodiment, the communication component 816 receives a broadcast signal or broadcast associated information from an external broadcast management system via a physical broadcast channel. In an embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the UE 800 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

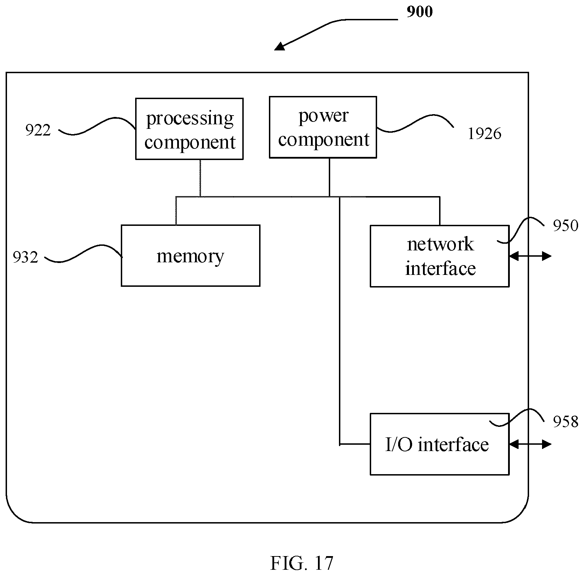

Fig. 17 shows a structure of a communication device according to an embodiment. For example, the communication device 900 may be provided as any network device. The communication device can be the above access network devices and/or the core network devices.

Referring to FIG. 17, the base station 900 includes a processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions to perform the above method applied to the access network device, for example, the methods shown in Fig. 2, FIGS 3 to5, FIGS 6A to 6D, FIGS 7A to 7B, and/or FIGS 8A to 8C.

The base station 900 may also include a power component 926 configured to perform power management of the base station 900 , a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other implementations of the present invention will be readily apparent to those skilled in the art from consideration of the specification and practice of the invention disclosed herein. The present disclosure is intended to cover any modification, use or adaptation of the present invention, these modifications, uses or adaptations follow the general principle of the present invention and include common knowledge or conventional technical means in the technical field not disclosed in the present disclosure. The specification and embodiments are to be considered exemplary only, with a true scope and spirit of the present invention being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for tracking area (TA) processing, performed by a core network device, comprising:
receiving a non-access stratum (NAS) request message and TA information of a first TA determined by an access network device for a user equipment (UE); and
sending a NAS message comprising the TA information of the first TA to the UE after the NAS request message.

2. The method according to claim 1, wherein sending the NAS message comprising the TA information of the first TA to the UE after the NAS request message, comprises:
determining whether the first TA is comprised in a registration area (RA) and/or a forbidden area (FA) of the UE according to the TA information; and
sending the NAS message comprising the TA information of the first TA to the UE according to a determined result.

3. The method according to claim 1 or 2, wherein sending the NAS message comprising the TA information of the first TA to the UE, comprises:
sending a triggering message carrying the TA information of the first TA to the UE, wherein the triggering message is configured to trigger the UE to initiate a registration update;
or,
sending a NAS response message carrying the TA information of the first TA for the NAS request message to the UE.

4. The method according to claim 3, wherein the NAS response message comprises at least one of:
a NAS response success message sent to the UE after a response success for the NAS request message; or
a NAS request rejection message sent to the UE after a response failure for the NAS request message.

5. The method according to claim 4, wherein the NAS request rejection message further comprises: a rejection cause;
wherein, in response to determining that the first TA is not comprised in the RA and the first TA is not comprised in the FA of the UE, the rejection cause has a first value to indicate that the first TA is not comprised in the RA and is not comprised in the FA of the UE; and
in response to determining that the first TA is not comprised in the RA and is comprised in the FA, the rejection cause has a second value, and is configured to indicate that the first TA is comprised in the FA and the UE is forbidden from accessing a network at the first TA.

6. A method for TA processing, performed by an access network device, comprising:
receiving a NAS request message sent by a UE;
determining a first TA of the UE; and
sending TA information of the first TA and the NAS request message to a core network device, or sending the TA information of the first TA to the UE.

7. The method according to claim 6, wherein determining the first TA of the UE, comprises:
determining the first TA according to TA information of a second TA broadcasted by a cell and/or location information of the UE and/or RA information of the UE.

8. The method according to claim 7, wherein,
the second TA information broadcasted by the cell in a first mode comprises TA information of a single TA;
or,
the second TA information broadcasted by the cell in a second mode comprises TA information of more than one TA.

9. The method according to claim 7, wherein the location information of the UE comprises:
location information reported by the UE;
or,
location information determined based on a measurement of the access network device.

10. The method according to claim 7, wherein the RA information of the UE comprises:
the RA information received from the UE;
or,
the RA information received from the core network device.

11. A method for TA processing, performed by a UE, comprising:
sending a NAS request message;
receiving TA information of a first TA, wherein the first TA is determined by an access network device for the UE; and
saving the TA information of the first TA.

12. The method according to claim 11, wherein receiving the TA information of the first TA comprises:
receiving a NAS message comprising the TA information of the first TA;
or,
receiving a message sent by the access network device that comprises the TA information of the first TA.

13. The method according to claim 12, further comprising:
sending, by a NAS layer in the UE, the TA information of the first TA to an AS layer of the UE.

14. The method according to claim 12, wherein receiving the NAS message comprising the TA information of the first TA, comprises:
receiving a triggering message carrying the TA information of the first TA returned after sending the NAS request message, wherein the triggering message is configured to trigger the UE to perform a registration update;
or,
receiving a NAS response message carrying the TA information of the first TA for the NAS request message.

15. The method according to claim 14, wherein the NAS response message comprises:
a NAS response success message of a response success for the NAS request message;
or,
a NAS request rejection message.

16. The method according to claim 15, wherein the NAS request rejection message comprises:
a NAS request rejection message carrying a rejection cause being a first value or a second value;
wherein,
the rejection cause has the first value that the first TA is not comprised in an RA and the first TA is not comprised in an FA of the UE;
or,
the rejection cause has the second value that the first TA is comprised in the FA.

17. The method according to claim 16, further comprising:
in response to the rejection cause having the first value, initiating, by the UE, a registration update procedure, and receiving and saving updated RA information from a core network device after the registration update is successfully completed;
or,
in response to the rejection cause having the second value, updating, by the UE, stored FA information to comprise the TA information of the first TA, and forbidding the UE from initiating a network request message.

18. The method according to claim 17, wherein after the UE completes processing of the first TA, the first TA comprises: the UE saves the first TA and adds the TA information of the first TA into RA information or FA information of the UE;
wherein the method further comprises:
initiating, by the UE, the registration update, in a case that a second TA before the processing of the first TA comprises the first TA and the second TA is changed after the processing of the first TA, and any TA in the changed second TA is not comprised in the RA, wherein the second TA is a TA indicated by TA information broadcasted by the access network device;
or,
initiating, by the UE, a network access request, in a case that the second TA before the processing of the first TA comprises the first TA and the first TA is in the FA, and the second TA is changed after the processing of the first TA.

19. The method according to claim 17, wherein, after the UE completes processing of the first TA, the method further comprises:
forbidding the UE from initiating the registration update, in a case that a second TA before the processing of the first TA does not comprise the first TA, and second TA information is not changed after the processing of the first TA;
or,
forbidding the UE from initiating a network access request, in a case that the second TA before the processing of the first TA does not comprise the first TA and the first TA is comprised in the FA, and the second TA is not changed after the processing of the first TA.

20. The method according to claim 17, wherein, after the UE completes processing of the first TA, the method further comprises:
initiating, by the UE, the registration update, in a case that a second TA before the processing of the first TA does not comprise the first TA and the second TA is changed after the processing of the first TA, and the changed second TA does not comprise the first TA;
or,
initiating, by the UE, a network access request, in a case that the second TA before the processing of the first TA does not comprise the first TA and the first TA is comprised in the FA, and the second TA is changed after the processing of the first TA and the changed second TA does not comprise the first TA.

21. An apparatus for tracking area (TA) processing, comprising:
a first receiving module, configured to receive a non-access stratum (NAS) request message and TA information of a first TA determined by an access network device for a user equipment (UE); and
a first sending module, configured to send a NAS message comprising the TA information of the first TA to the UE after the NAS request message.

22. The apparatus according to claim 21, wherein the first sending module is configured to determine whether the first TA is comprised in a registration area (RA) and/or a forbidden area (FA) of the UE according to the TA information; and send the NAS message comprising the TA information of the first TA to the UE according to a determined result.

23. The apparatus according to claim 21 or 22, wherein the first sending module is configured to send a triggering message carrying the TA information of the first TA to the UE, wherein the triggering message is configured to trigger the UE to initiate a registration update;
or send a NAS response message carrying the TA information of the first TA for the NAS request message to the UE.

24. The apparatus according to claim 23, wherein the NAS response message comprises at least one of:
a NAS response success message sent to the UE after a response success for the NAS request message; or
a NAS request rejection message sent to the UE after a response failure for the NAS request message.

25. The apparatus according to claim 24, wherein the NAS request rejection message further comprises: a rejection cause;
wherein, in response to determining that the first TA is not comprised in the RA and the first TA is not comprised in the FA of the UE, the rejection cause has a first value to indicate that the first TA is not comprised in the RA and is not comprised in the FA of the UE; and
in response to determining that the first TA is not comprised in the RA and is comprised in the FA, the rejection cause has a second value, and is configured to indicate that the first TA is comprised in the FA and the UE is forbidden from accessing a network at the first TA.

26. An apparatus for TA processing, comprising:
a second receiving module, configured to receive a NAS request message sent by a UE;
a determining module, configured to determine a first TA of the UE; and
a second sending module, configured to send TA information of the first TA and the NAS request message to a core network device, or send the TA information of the first TA to the UE.

27. The apparatus according to claim 26, wherein the determining module is specifically configured to determine the first TA according to TA information of a second TA broadcasted by a cell and/or location information of the UE and/or RA information of the UE.

28. The apparatus according to claim 27, wherein,
the second TA information broadcasted by the cell in a first mode comprises TA information of a single TA;
or,
the second TA information broadcasted by the cell in a second mode comprises TA information of more than one TA.

29. The apparatus according to claim 27, wherein the location information of the UE comprises:
location information reported by the UE;
or,
location information determined based on a measurement of the access network device.

30. The apparatus according to claim 27, wherein the RA information of the UE comprises:
the RA information received from the UE;
or,
the RA information received from the core network device.

31. An apparatus for TA processing, comprising:
a third sending module, configured to send a NAS request message;
a third receiving module, configured to receive TA information of a first TA, wherein the first TA is determined by an access network device for the UE; and
a saving module, configured to save the TA information of the first TA.

32. The apparatus according to claim 31, wherein the third receiving module is configured to receive a NAS message comprising the TA information of the first TA; or receive a message sent by the access network device that comprises the TA information of the first TA.

33. The apparatus of claim 32, further comprising:
a selection transmission module, configured to send, by a NAS layer in the UE, the TA information of the first TA to an AS layer of the UE.

34. The apparatus according to claim 32, wherein the third receiving module is configured to receive a triggering message carrying the TA information of the first TA returned after sending the NAS request message, wherein the triggering message is configured to trigger the UE to perform a registration update; or receive a NAS response message carrying the TA information of the first TA for the NAS request message.

35. The apparatus according to claim 34, wherein the NAS response message comprises:
a NAS response success message of a response success for the NAS request message;
or,
a NAS request rejection message.

36. The apparatus according to claim 35, wherein the NAS request rejection message comprises:
a NAS request rejection message carrying a rejection cause being a first value or a second value;
wherein,
the rejection cause has the first value that the first TA is not comprised in an RA and the first TA is not comprised in an FA of the UE;
or,
the rejection cause has the second value that the first TA is comprised in the FA.

37. The apparatus according to claim 36, wherein the apparatus further comprises:
in response to the rejection cause having the first value, initiating, by the UE, a registration update procedure, and receiving and saving updated RA information from the core network device after the registration update is successfully completed;
or,
in response to the rejection cause having the second value, updating, by the UE, stored FA information to comprise the TA information of the first TA, and forbidding the UE from initiating a network request message.

38. The apparatus according to claim 37, after the UE completes processing of the first TA, the first TA comprises: the UE saves the first TA and adds the TA information of the first TA into RA information or FA information of the UE;
wherein the apparatus further includes:
a first updating module, configured to initiate, by the UE, the registration update, in a case that a second TA before the processing of the first TA comprises the first TA and the second TA is changed after the processing of the first TA, and any TA in the changed second TA is not comprised in the RA, wherein the second TA is a TA indicated by TA information broadcasted by the access network device;
or,
a first access module, configured to initiate, by the UE, a network access request, in a case that the second TA before the processing of the first TA comprises the first TA and the first TA is in the FA, and the second TA is changed after the processing of the first TA.

39. The apparatus according to claim 37, wherein, after the UE completes processing of the first TA, the apparatus further comprises:
a first forbidding module, configured to forbid the UE from initiating the registration update, in a case that a second TA before the processing of the first TA does not comprise the first TA, and second TA information is not changed after the processing of the first TA;
or,
a second forbidding module, configured to forbid the UE from initiating a network access request, in a case that the second TA before the processing of the first TA does not comprise the first TA and the first TA is comprised in the FA, and the second TA is not changed after the processing of the first TA.

40. The apparatus according to claim 37, wherein, after the UE completes processing of the first TA, the apparatus further comprises:
a second update module, configured to initiate, by the UE, the registration update, in a case that a second TA before the processing of the first TA does not comprise the first TA and the second TA is changed after the processing of the first TA, and the changed second TA does not comprise the first TA;
or,
a second access module, configured to initiate, by the UE, a network access request, in a case that the second TA before the processing of the first TA does not comprise the first TA and the first TA is comprised in the FA, and the second TA is changed after the processing of the first TA and the changed second TA does not comprise the first TA.

41. A communication device, comprising a processor, a transceiver, a memory, and executable programs stored on the memory and capable of being run by the processor, wherein the processor is configured to perform the method of any one of claims 1 to 5, 6 to 10, or 11 to 20, by running the executable programs.

42. A computer storage medium, having stored thereon executable programs that, when executed by a processor, enable implementing the method of any one of claims 1 to 5, 6 to 10, or 11 to 20.
